# FASCICULE DE BREVET EUROPEEN

(11) **EP 0 408 405 B1**
(45) Date de publication et mention de la délivrance du brevet: **01.09.1993**
(21) Numéro de dépôt: 90401584.9
(22) Date de dépôt: 08.06.1990
(51) Int. Cl.: B23K 26/00

(54) **Dispositif de soudage au laser à l'intérieur d'un élément tubulaire**
Vorrichtung zum Laserschweissen im Inneren eines Rohrelementes
Device for laser welding inside a tubular element

(30) Priorité: 28.06.1989 FR 8908634
(43) Date de publication de la demande: 16.01.1991
(73) Titulaire: FRAMATOME, 92400 Courbevoie (FR)
(72) Inventeur: Griffaton, Jacques, F-71100 Chalon S/Saone (FR)
(74) Mandataire: Jacobson, Claude

(56) Documents cités:
- EP-A- 0 244 283
- US-A- 4 694 136
- PATENT ABSTRACTS OF JAPAN vol. 5, no. 143 (M-87)(815), 9 septembre 1981 & JP-A-5674393 (TOSHIBA CROP.)
- PATENT ABSTRACTS OF JAPAN vol. 6, no. 76 (M-128)(954), 13 mai 1982 & JP-A-5714490 (TOKYO SHIBAURA DENKI K.K.)

## Description

L'invention concerne un dispositif de soudage au laser à l'intérieur d'un élément tubulaire, du type comprenant un laser de soudage, une tête de soudage équipée de moyens de centrage dans l'élément tubulaire et comprenant une cellule optique qui comporte elle-même des moyens de focalisation et un miroir incliné de renvoi optique pour recevoir un faisceau laser suivant l'axe de la tête et pour renvoyer ce faisceau focalisé sur un point d'impact de la paroi de l'élément tubulaire, et des moyens de transport du faisceau laser du laser à la cellule optique. Elle s'applique notamment à la restauration de l'étanchéité des tubes de générateurs de vapeur d'un réacteur nucléaire à eau sous pression.

Les générateurs de vapeur des centrales nucléaires à eau sous pression comportent généralement un faisceau constitué d'un très grand nombre de tubes de petit diamètre coudés en U et fixés à chacune de leur extrémités par sertissage dans une plaque tubulaire de forte épaisseur. La partie du générateur de vapeur située en dessous de la plaque tubulaire constitue une boîte à eau dans une première partie de laquelle l'eau "primaire" sous pression venant de la cuve du réacteur est répartie dans les tubes du faisceau. Dans une seconde partie, l'eau ayant circulé dans les tubes est récupérée, pour être renvoyée, par une conduite du circuit primaire du réacteur, dans la cuve renfermant le coeur constitué par les assemblages combustibles assurant l'échauffement de l'eau sous pression. L'eau d'alimentation du générateur de vapeur vient en contact avec la surface extérieure des tubes du faisceau, dans la partie du générateur de vapeur située au- dessus de la plaque tubulaire, pour y être transformée en vapeur, et cette vapeur est envoyée à la turbine associée au réacteur nucléaire.

Les parois des tubes du faisceau constituent donc une barrière entre l'eau sous pression constituant le fluide primaire du réacteur et l'eau d'alimentation constituant le fluide secondaire. Le fluide primaire qui vient en contact avec les assemblages combustibles et les structures internes de la cuve du réacteur contient des produits radioactifs en quantité plus ou moins importante. Il convient donc d'éviter toute mise en contact du fluide primaire et du fluide secondaire, dont la contamination pourrait avoir des conséquences très néfastes. Il faut pour cela éviter au maximum l'apparition de fuites à travers les parois des tubes du faisceau du générateur de vapeur et réparer le plus vite possible et de façon efficace les tubes dont la paroi est percée.

De telles réparations sont généralement nécessaires pendant la durée de vie normale du réacteur. En effet, du fait des contraintes d'origine thermique et mécanique ou de la corrosion subies par les tubes du faisceau, des fissures peuvent prendre naissance dans les parois des tubes du faisceau, aussi bien du côté primaire que du côté secondaire. Ces réparations sont effectuées pendant les phases d'entretien du réacteur nucléaire.

On connait un procédé de réparation des tubes du faisceau d'un générateur de vapeur par manchonnage de ces tubes, au niveau du défaut entraînant une perte d'étanchéité. Un manchon d'un diamètre extérieur un peu inférieur au diamètre intérieur du tube à réparer et d'une longueur suffisante pour recouvrir la zone défectueuse est introduit dans le tube, par la face d'entrée de la plaque tubulaire sur laquelle affleurent les extrémités des tubes. Il y est placé de façon à affleurer la face d'entrée de la plaque tubulaire pour les tubes situés dans la partie centrale de celle-ci, ou à mi-épaisseur de la plaque tubulaire pour les tubes situés en périphérie de celle-ci. Il est alors fixé à l'intérieur du tube de manière à réaliser deux jonctions étanches entre lui et le tube de part et d'autre de la zone défectueuse.

On connait de nombreuses méthodes pour réaliser la fixation du manchon de part et d'autre de la zone défectueuse. En particulier, il est connu de réaliser une expansion diamétrale du manchon dans deux zones voisines de ses extrémités situées pour l'une dans l'épaisseur de la plaque tubulaire, pour l'autre au-delà de la face de sortie de la plaque tubulaire, ceci après nettoyage du tube dans ces deux zones. L'expansion peut être obtenue soit par des méthodes hydrauliques ou mécaniques comme le dudgeonnage, soit par des méthodes d'expansion par explosion, soit par des méthodes de soudage ou de brasage.

Toutes ces opérations nécessitent d'intervenir à l'intérieur de la boîte à eau du générateur de vapeur, c'est-à-dire dans une partie de ce générateur qui a été en contact avec le fluide primaire chargé de produits radioactifs, pendant le fonctionnement du réacteur, et où un opérateur humain se trouve soumis à une forte radioactivité.

On a donc proposé des dispositifs automatiques et commandés à distance capables de réaliser au moins partiellement les opérations nécessaires pour le manchonnage des tubes.

On connait par exemple un procédé et un dispositif permettant d'installer dans un tube de générateur fuitard un manchon à partir de l'extérieur de la boîte à eau. Ce procédé et ce dispositif ont fait l'objet de la demande de brevet FR A1 2 598 209. Le manchon est introduit dans le tube à partir de l'extérieur de la boîte à eau par un tube flexible appelé boa, sur un double expanseur hydraulique avec lequel l'opération d'accostage dans le tube est réalisée: après une dilatation suffisante réalisée dans les deux zones situées aux extrémités du manchon par gonflement des membranes élastiques du double expanseur, le manchon reste positionné dans le tube.

Les membranes sont alors décompressées et l'expanseur est retiré du manchon. Les outils de fixation, dudgeon haut et dudgeon bas, sont ensuite successivement introduits par le même tube flexible dans le manchon, respectivement dans la zone haute puis dans la zone basse pour réaliser la fixation du manchon par dudgeonnage.

L'inconvénient de cette méthode est qu'elle ne permet pas d'obtenir des fixations du manchon rigoureusement étanches.

Pour remédier à cet inconvénient, il est connu de réaliser la fixation par soudage au laser du manchon dans le tube à chaque extrémité du manchon.

La demande de brevet FR-A1-2 637 829 propose un dispositif du type indiqué plus haut, dans lequel le laser est de type YAG et son faisceau est transporté par une fibre optique. Il est prévu des moyens de réglage préalable de la focalisation du faisceau, mais ces moyens ne prennent pas en compte l'ovalisation du manchon.

Le brevet US-A-4 694 136 décrit un autre dispositif du type indiqué plus haut. Ce dispositif comporte une tête de soudage optique installée dans le tube et un laser de puissance situé à l'extérieur de la boîte à eau du générateur de vapeur. Le transport du faisceau se fait par des moyens optiques en voie aérienne, entre le laser situé à l'extérieur de la boîte à eau du générateur de vapeur et la tête de soudage. La tête de soudage utilisée présente un inconvénient lié au fait que la distance focale est maintenue constante et égale à la distance de tir par une butée à bille située en avant de la zone à souder et un ressort d'application : ce système est générateur de frottements, d'à-coups et de vibrations dommageables pour la qualité de la soudure réalisée. Il est de plus inefficace lorsque la butée s'appuie sur un cordon de soudure déjà réalisé ou sur une partie à diamètre variable du manchon.

L'invention a pour but de permettre un maintien efficace de la focalisation pendant la rotation de la tête de soudage malgré l'ovalisation du manchon ou, plus généralement, de l'élément tubulaire dans lequel est réalisée la soudure.

A cet effet, l'invention a pour objet un dispositif de soudage du type précité, caractérisé en ce qu'il comprend des moyens de détection de la forme de l'élément tubulaire au voisinage dudit point d'impact, ces moyens de détection étant indépendants desdits moyens de centrage, en ce que le miroir incliné est monté mobile dans la tête de soudage et en ce que la position du miroir incliné est commandée par lesdits moyens de détection.

Des exemples de réalisation de l'invention vont maintenant être décrits à l'aide des figures schématiques annexées, parmi lesquelles :
- les Fig.1A et 1B sont des coupes longitudinales des deux variantes de manchons utilisés pour la mise en oeuvre de l'invention dans le cas partculier évoqué ci-dessus ;
- la Fig.2 est une vue générale d'un dispositif de soudage suivant l'invention dans le même cas ;
- la Fig.3 est une coupe longitudinale d'une partie constituant un ensemble terminal de ce dispositif de soudage ;
- la Fig.4 est une coupe longitudinale à échelle agrandie de cette même partie du dispositif de soudage ;
- la Fig.5 est une coupe longitudinale à plus grande échelle de la cellule optique de ce dispositif ;
- la Fig. 6 est une coupe analogue à la Fig.5 d'un autre mode de réalisation de la cellule optique ;
- la Fig.7 est un schéma des moyens de focalisation ; et
- la Fig. 8 montre une variante du dispositif.

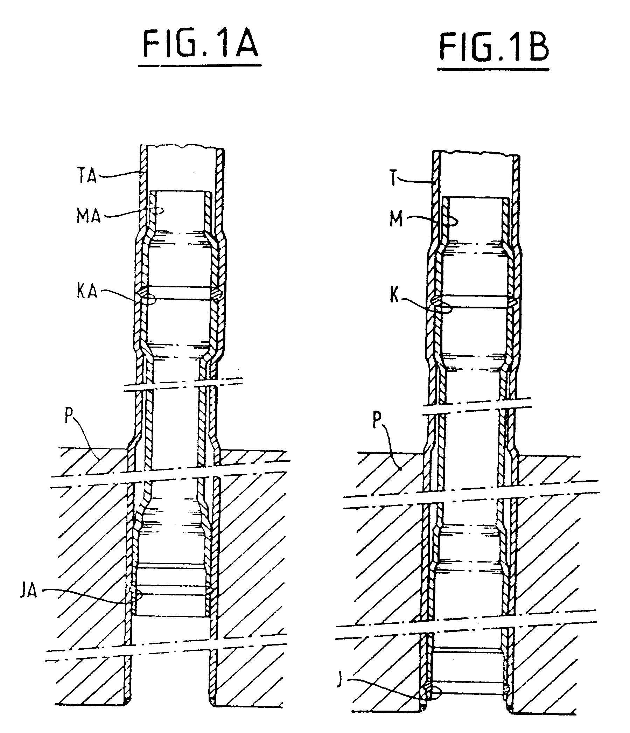

Les Fig.1A et 1B représentent les deux types de manchons utilisés pour la réparation de tubes de générateur de vapeur de réacteur nucléaire :
- la Fig.1A montre une coupe longitudinale d'un manchon MA utilisé pour réparer des tubes tels que TA situés dans la périphérie d'une plaque tubulaire P. Un cordon de soudure JA constitue le joint inférieur, situé vers la mi-épaisseur de la plaque P ;
- la Fig.1B montre une coupe en élévation d'un manchon long utilisé pour réparer des tubes situés dans la partie centrale de la plaque tubulaire P, ce qui est le cas de 80% des tubes. Le joint inférieur J se trouve près de la face inférieure de la plaque.

Le joint supérieur KA ou K est dans les deux cas situé au-delà de la face supérieure de la plaque P, près de l'extrémité supérieure du manchon.

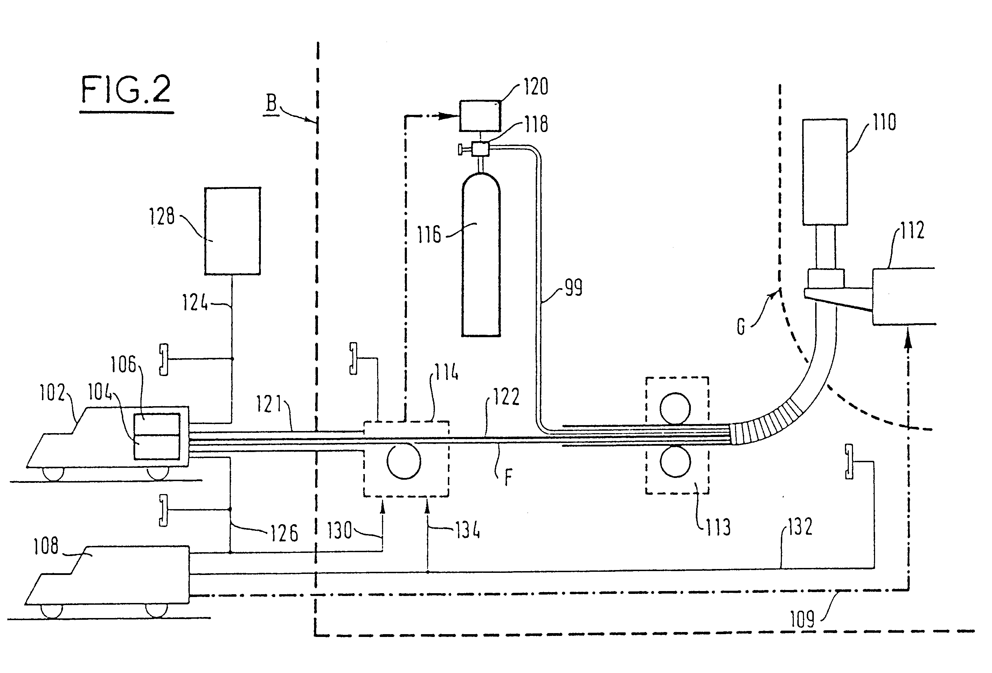

La Fig.2 montre l'ensemble des éléments qui constituent le dispositif selon l'invention. Ce sont :
- Un poste mobile 102 de commande laser situé à l'extérieur du bâtiment réacteur B. Ce poste comprend un laser de soudage 104 du type YAG, un laser de réglage 106 du type Hélium-Néon émettant une lumière visible et couplé avec le laser YAG, des raccordements d'alimentation électrique générale, des raccordements pour l'eau de refroidissement, un rack de commande, et des moyens vidéo de contrôle. Le laser de soudage utilisé est de préférence un laser dopé au néodyme YAG, de longueur d'onde de 1,06 micromètre, et ayant une puissance de 1,2 kW. Cependant, tout autre laser ayant une émission de longueur d'onde ne dépassant pas cette valeur ou pour laquelle il existe une fibre optique transparente, et d'une puissance supérieure à 1000 W, peut être utilisé.
- Un poste mobile 108 de commande porteur, situé par exemple à l'extérieur du bâtiment réacteur mais pouvant aussi être situé dans ce bâtiment, pour commander un porteur 112. Ce poste comprend également un rack de commande, des moyens vidéo de contrôle, des raccordements d'alimentation électrique générale, et des raccordements 109 de liaison au porteur pour commander ce dernier.
- Un ensemble terminal 110 comportant la tête de soudage. Cet ensemble est porté à l'extrémité d'un bras du porteur 112, qui est installé dans la boîte à eau G du générateur de vapeur.
- Un tireur-pousseur 113 situé dans le bâtiment réacteur à proximité du générateur de vapeur.
- Un poste 114 de relais des connexions, situé dans le bâtiment réacteur.
- Un système d'alimentation en gaz comportant une bouteille 116, des vannes 118 et des actionneurs de vanne 120, situé dans le bâtiment réacteur.
- Un conduit flexible souple 121 reliant le poste de commande laser 102 au dispositif de soudage via le relais de connexion et le tireur-pousseur. Ce conduit contient des câbles 122 de transmission des signaux de commande du dispositif de soudage et une fibre optique F de transport de l'énergie lumineuse des lasers vers la tête de soudage contenue dans l'ensemble terminal 110. La fibre optique utilisée de préférence est une fibre optique silice silice. Mais toute autre fibre transparente au spectre électromagnétique de l'émission du laser utilisé peut convenir dans la mesure où son coefficient d'atténuation reste de l'ordre de 10 et de préférence 4 dB au km ou inférieur pour la longueur d'onde du laser YAG.

Des câbles de télécommunications 124, 126, 130, 132 et 134 relient en outre ces divers éléments entre eux et à un terminal téléphonique 128.

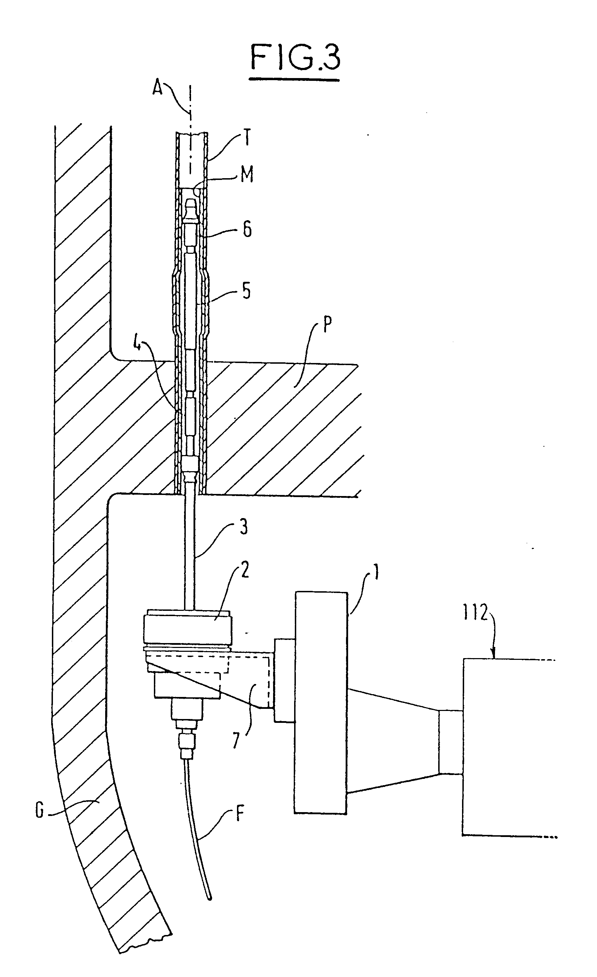

La Fig.3 montre des éléments de l'ensemble terminal 110. Cet ensemble constitue une partie du dispositif de soudage installée dans le tube à réparer T, ou tube récepteur, qui a été préalablement équipé d'un manchon à souder M. Cet ensemble est représenté en position pour le soudage. Il est fixé sur un élévateur 1 qui monte et baisse, à l'extrémité du bras du porteur 112, et qui est utilisé pour introduire et positionner la tête de soudage dans le manchon. Il comporte une cellule de motorisation 2, et la tête de soudage. Cette dernière est constituée par un prolongateur souple 3, un prolongateur rigide 4, une cellule optique 5 et une ogive de guidage 6.

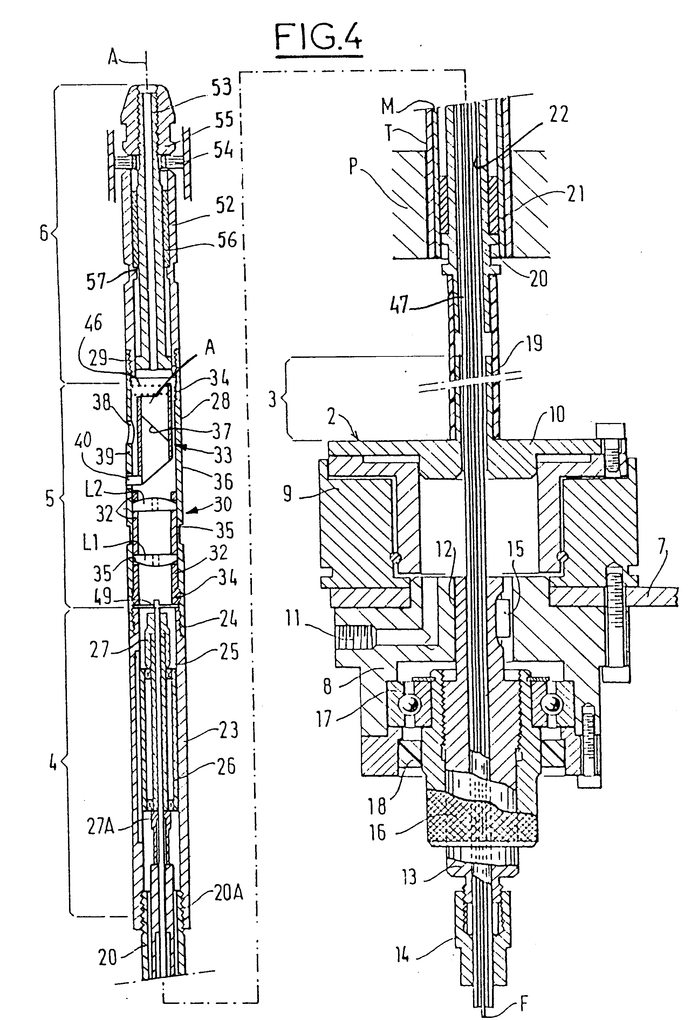

La Fig. 4 montre une coupe longitudinale de cet ensemble. La cellule 2 est fixée sur l'élévateur 1 par une équerre 7 et comporte un boîtier 8 et le socle 9 d'un plateau tournant montés dans l'axe l'un de l'autre. Ce plateau tournant a son socle fixe et un noyau tournant 10 sur lequel le prolongateur souple 3 est fixé par sertissage. Le boîtier 8 a un canal d'arrivée de gaz 11 et un alésage central 12. La gaine 47 de la fibre optique F est bloquée dans une pince 13 par un écrou 14. Cette pince coulisse axialement dans l'alésage 12 et est maintenue fixe en rotation par une clavette 15. La position axiale de la pince par rapport au boîtier est réglable à l'aide d'une bague vissée 16, ce qui permet de régler au montage la position de l'extrémité distale de la fibre par rapport à la tête de soudage. On comprend donc que l'altitude convenable de soudage est obtenue par réglage avec l'élévateur 1 de la position de l'équerre de supportage 7, et que le réglage axial de la position relative de la fibre optique par rapport au boîtier est obtenu par rotation de la bague 16. Cette bague est montée libre en rotation et fixe en translation dans le boîtier par un roulement 17. Sur la figure, elle est représentée en version manuelle sans asservissement. On peut cependant facilement réaliser sa motorisation, comme décrit plus loin. L'étanchéité du montage de la bague est assurée par un joint 18.

Le prolongateur souple 3 est composé d'un tronçon de gaine extérieure 19 souple emmanchée à une extrémité sur le noyau rotatif 10 du plateau tournant et comportant à l'autre extrémité un embout rigide 20 terminé par un filetage 20A pour vissage dans le prolongateur rigide 4. Sur cet embout est monté coulissant un palier lisse 21 dont le diamètre extérieur est très légèrement inférieur au diamètre du manchon M dans le cas représenté du manchonnage des tubes centraux, ou du tube récepteur dans le cas du manchonnage des tubes périphériques. Ce palier assure le guidage en rotation de la tête de soudage. L'embout a un alésage intérieur 22 dans lequel passe librement la fibre optique.

Le prolongateur rigide 4 est constitué par une pièce cylindrique 23 comportant à une extrémité un taraudage gui coopère avec le filetage 20A du prolongateur souple, et, à l'autre extrémité, un filetage 24 pour fixation de la cellule optique 5. Cette pièce a un alésage interne 25 dans lequel coulisse un palier 26 autour duquel sont prévues des rainures longitudinales. Ce palier est solidaire de la fibre optique F. Il est constitué par deux roulements à billes et une bague. Ce palier assure le guidage axial du déplacement de la fibre optique par rapport au prolongateur, et le guidage en rotation de l'ensemble de la tête de soudage par rapport à la fibre optique. L'extrémité de la fibre optique est sertie dans un embout 27 et une butée 27A, qui maintiennent les roulements du palier 26.

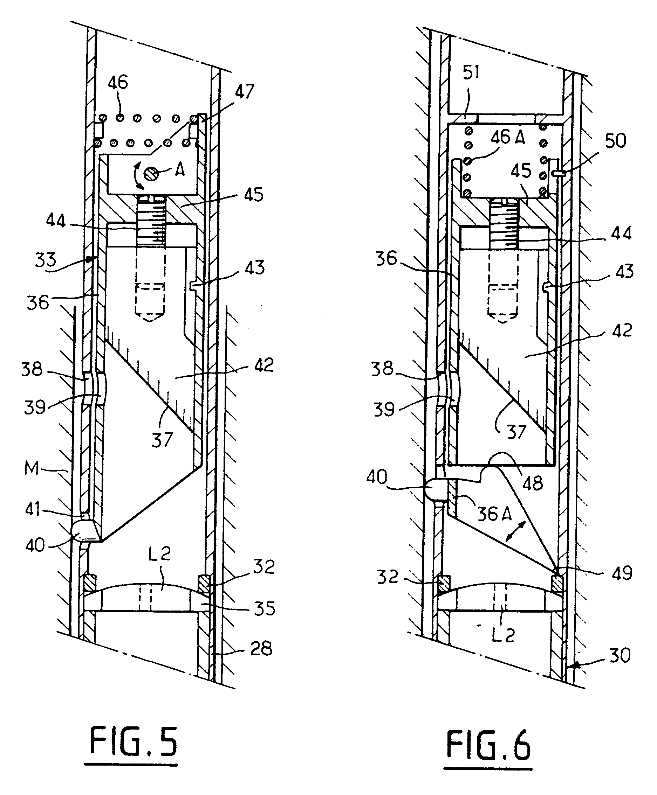

La cellule optique 5 est constituée par une portion de tube 28 dont les deux extrémités sont taraudées en 24 et 29. Le taraudage inférieur 24 reçoit le prolongateur rigide, le taraudage supérieur 29 reçoit l'ogive. Un empilage 30 de lentilles L1, L2 et d'entretoises 32 est monté à l'intérieur de ce tube, fixé par un écrou inférieur 34. Les lentilles et les écrous ont sur quatre génératrices réparties à 90 degrés des rainures 35 destinées au passage du gaz de balayage de la zone de soudure. Une pièce optique 33 est également montée dans le tube 28, au-dessus de l'empilage 30. Cette pièce 33 (figure 5) comprend un porte-miroir tubulaire 36 articulé dans le tube 28 sur un axe transversal A. Dans ce porte-miroir est fixé un miroir-plan 37 incliné à 45° environ et parallèle à l'axe A. Le faisceau lumineux pénètre dans le porte-miroir 36 suivant l'axe longitudinal et subit une réflexion radiale. Au droit du faisceau réfléchi, les éléments 28 et 36 présentent des ouvertures respectives 38 et 39 en regard.

L'extrémité inférieure du porte-miroir 36 porte un ergot palpeur 40 en saillie radiale qui traverse une lumière de guidage 41 du tube 28, prévue sur la même génératrice que l'ouverture 38, au-dessous de cette dernière et au-dessus de la lentille supérieure L2. Le miroir 37 constitue la face inférieure d'un bloc 42 coulissant dans le porte-miroir 36 et solidarisé de celui-ci en rotation par un système clavette-rainure 43. Le réglage de la position longitudinale du bloc 42 s'effectue au moyen d'une vis 44 à deux pas inverses vissée d'une part dans la face supérieure du bloc 42, d'autre part dans une cloison transversale 45 du porte-miroir 36. Un ressort hélicoïdal 46 perpendiculaire à l'axe A et situé au-dessus de celui-ci est comprimé entre la paroi du tube 28 et un prolongement supérieur 47 du porte-miroir 36 diamétralement opposé à l'ouverture 39. Ainsi, l'ergot palpeur 40 est constamment maintenu en appui sur l'élément tubulaire M à souder.

La variante de la figure 6 diffère de la précédente par les points suivants :
- l'ergot 40 est porté par un tronçon tubulaire 36A séparé du porte-miroir 36 et s'appuyant d'une part sur la tranche inférieure plane de celui-ci par deux surfaces de came 48,d'autre part sur l'entretoise supérieure 32 de l'empilage 30 par une petite zone 49 diamétralement opposée à l'ergot 40. Ainsi, le tronçon 36A est mobile en rotation autour d'un axe transversal passant par la zone 49. Cet axe se trouve à peu près à la même distance de la paroi à souder et du porte-miroir 36.

De plus, le porte-miroir 36 est mobile en translation dans le tube 28, guidé par un système clavette-rainure 50, et il est sollicité vers le bas par un ressort hélicoïdal 46A comprimé entre la cloison 45 et une cloison radiale 51 prévue dans le tube 28.

L'ogive 6 (Fig. 4) est constituée par un tube 52 dont l'extrémité inférieure est filetée pour vissage sur la cellule optique. A l'intérieur de ce tube un axe 53 porte une brosse de centrage 54 maintenue par un nez 55. Cet axe coulisse dans un coussinet 56 emmanché à force dans le tube 52. Un ressaut 57 limite le déplacement axial de l'axe 53 dans le tube.

Au cours du soudage, la tête de soudage constituée par la gaine extérieure 19 du prolongateur souple, la pièce cylindrique 20, le prolongateur rigide 23, la cellule optique 5 et le tube 52 de l'ogive effectue, sous l'action d'un moteur de rotation non représenté inclus dans la cellule de motorisation 2, une rotation complète de 360° guidée par la brosse de centrage 54 dans la partie supérieure et par le palier coulissant 21. Ce sont les deux points d'appui sur la surface interne du manchon M. La fibre optique reste fixe pendant cette rotation, ainsi que l'axe portebrosse 53 de l'ogive. Si deux ou plusieurs cordons légèrement décalés sont nécessaires, la tête de soudage peut être déplacée vers le bas dans l'axe longitudinal grâce aux paliers coulissants 21 et 56, la brosse 54 restant fixe.

En variante, l'axe 53 peut porter deux brosses 54 à une petite distance l'une de l'autre. Le centrage de la tête de soudage est alors assuré même si la bague 21 se trouve au-dessous de la plaque P, lors d'un soudage effectué près de la face inférieure de celle-ci.

Les prolongateurs et la tête de soudage délimitent un espace annulaire continu autour de la gaine protectrice 47 de la fibre optique. Cet espace est rendu ininterrompu par les rainures longitudinales prévues autour des roulements à billes du prolongateur rigide et au niveau des écrous et des lentilles, de façon à permettre le passage du gaz de balayage du boîtier 8 jusqu'au dessus de la soudure.

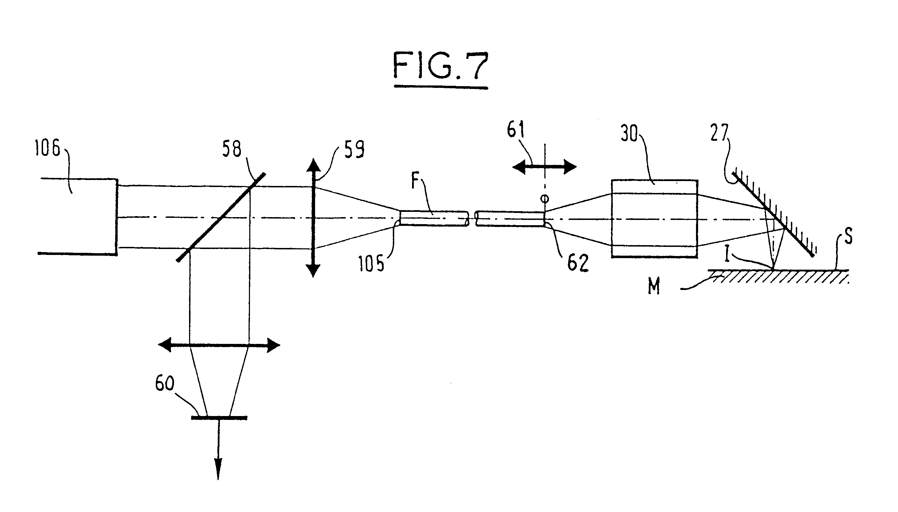

La figure 7 montre le principe du réglage de la distance de focalisation du faisceau sur la surface interne du manchon. On introduit la tête optique dans le manchon à souder M. On utilise alors le laser de réglage 106 du type Hélium-Néon, dont le faisceau de lumière visible emprunte exactement le même chemin que la lumière du laser de soudage. Une lame séparatrice 58 est installée à la sortie du laser 106, avant une lentille convergente 59 qui concentre la lumière sur l'entrée 105 de la fibre F. Cette lame laisse passer le faisceau lumineux issu du laser, mais réfléchit sur un récepteur photovoltaïque 60 le faisceau issu d'une tache éclairée qui est centrée au point I sur la face interne S du manchon M et qui constitue un objet lumineux. Si on fait varier selon la flèche 61 la postion axiale de l'extrémité de sortie 62 de la fibre optique par rapport à la cellule optique, qui comporte l'ensemble de lentilles 30 et le miroir 37, le signal fourni par le récepteur photovoltaïque 60 est maximal pour une position optimale de la fibre optique correspondant à une focalisation de la lumière au point d'impact I. Pour prérégler la position nécessaire au soudage, on recherche la position optimale par action sur la bague 16 et on stabilise cette position par immobilisation de cette bague, en tenant compte du décalage connu entre la position du foyer du faisceau HeNe et celle du foyer du faisceau YAG.

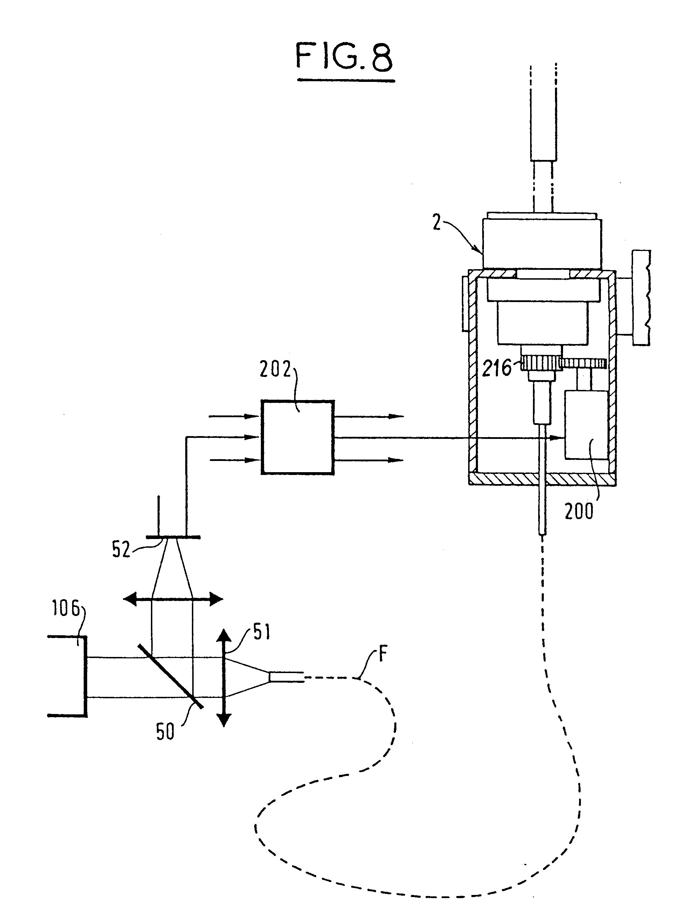

La figure 8 montre un dispositif de soudage modifié dans lequel la position axiale optimale de la fibre optique est obtenue par réglage automatique de la position d'une bague 216. Cette bague joue le même rôle que la bague 16, et elle est entrainée par un moteur de réglage 200 qui est commandé par une centrale d'acquisition et de gestion 202 après acquisition de données correspondant à un manchon à souder, le reste du dispositif étant inchangé.

On va maintenant décrire la réalisation complète de la fixation d'un manchon par soudage dans un tube de générateur de vapeur à réparer, à l'aide du dispositif ainsi modifié. On installe à l'extérieur du bâtiment réacteur d'une centrale nucléaire un poste de commande laser 102 comprenant le laser YAG 104 et le laser visible 106, un poste de commande 108 d'un porteur 112 installé à l'intérieur de la boîte à eau G d'un générateur de vapeur ayant des tubes fuitards tels que T. Dans ces tubes on a accosté par une méthode connue des manchons tels que M à souder. Le porteur porte l'ensemble terminal 110 du dispositif comportant la tête de soudage qui est reliée au poste de commande laser par un tube flexible contenant la fibre optique F et des câbles de transmission de si gnaux 124. On introduit à distance cet ensemble terminal avec la tête de soudage dans le manchon à souder, on place cette tête en position haute, près de l'extrémité supérieure du manchon, à l'aide de l'élévateur 1, on envoie un faisceau laser visible dans la cellule optique 5, et on règle la position de la fibre optique pour obtenir une tache focale minimale. Ensuite, on envoie le faisceau laser de soudage et on soude sur une révolution le manchon sur le tube. On place ensuite avec l'élévateur la tête de soudage en position basse, près de l'extrémité inférieure du manchon, on envoie un faisceau laser visible dans la cellule optique, et on règle la position de la fibre optique pour obtenir une tache focale minimale. Ensuite, on envoie le faisceau laser de soudage et on soude sur une révolution le manchon sur le tube.

Pendant chaque opération de soudage, le palpeur 40 suit la paroi du manchon M et déplace à peu près radialement (Fig. 5) ou axialement (Fig. 6) le miroir 37. La géométrie des éléments de la cellule optique est calculée de façon que la longueur du trajet optique de la lentille supérieure L2 à la paroi à souder reste pratiquement constante lors de ces déplacements du miroir. Le faisceau laser reste ainsi constamment focalisé de la même manière optimale quelle que soit l'ovalisation du manchon M.

On remarque que le palpeur 40 coopère avec une région du manchon située près de la zone à souder et au-dessous de celle-ci. Il s'agit donc d'une région propre, dépourvue de tout cordon de soudure et de configuration quasi identique à celle de la zone à souder.

## Revendications

1. Dispositif de soudage au laser à l'intérieur d'un élément tubulaire (M), du type comprenant un laser de soudage (104), une tête de soudage (3 à 6) équipée de moyens (21, 54) de centrage dans l'élément tubulaire et comprenant une cellule optique (5) qui comporte elle-même des moyens de focalisation (L1,L2) et un miroir incliné (37) de renvoi optique pour recevoir un faisceau laser suivant l'axe de la tête et pour renvoyer ce faisceau focalisé sur un point d'impact de la paroi de l'élément tubulaire (M), et des moyens (F) de transport du faisceau laser du laser à la cellule optique, caractérisé en ce qu'il comprend des moyens (40) de détection de la forme de l'élément tubulaire (M) au voisinage dudit point d'impact, ces moyens de détection (40) étant indépendants desdits moyens de centrage, en ce que le miroir incliné (37) est monté mobile dans la tête de soudage (3 à 6) et en ce que la position du miroir incliné (37) est commandée par lesdits moyens de détection.

2. Dispositif suivant la revendication 1, caractérisé en ce que lesdits moyens de détection comprennent un palpeur (40) maintenu en appui sur la paroi de l'élément tubulaire (M).

3. Dispositif suivant la revendication 1 ou 2, caractérisé en ce que, par rapport au trajet parcouru par le faisceau laser, les moyens de détection (40) sont prévus en amont d'une ouverture (38) par laquelle le faisceau laser sort de la tête de soudage (3 à 6).

4. Dispositif suivant la revendication 2, caractérisé en ce que le palpeur (40) traverse une ouverture (41) de la tête de soudage située en amont du miroir (37) par rapport au trajet parcouru par le faisceau laser.

5. Dispositif suivant la revendication 2 ou 4, caractérisé en ce que le palpeur (40) est relié mécaniquement au miroir (37).

6. Dispositif suivant la revendication 5, caractérisé en ce que le palpeur (40) est solidaire d'un support de miroir (36) sollicité par un ressort (46) et articulé autour d'un axe (A) parallèle au miroir (37).

7. Dispositif suivant la revendication 5, caractérisé en ce que le palpeur (40) est porté par un élément porte-came (36A) qui est articulé dans la tête de soudage et qui s'appuie sur un support de miroir (36) sollicité par un ressort (46A) et mobile axialement dans cette tête de soudage.

## Patentansprüche

1. Vorrichtung zum Laserschweißen im Inneren eines Rohrelements (M), von der Art umfassend einerseits ein Laserschweißengerät (104), einen Schweißkopf (3-6), der mit Zentriervorrichtungen (21, 54) im Rohrelement ausgestattet ist und eine optische Zelle (b) aufweist, die selbst Fokusierungsvorrichtungen (L1, L2) und einen geneigten Spiegel (37) zum optischen Zurückwerfen aufweist, der gemäß der Achse des Kopfes ein Laserbündel aufnimmt, um dieses fokussierte Laserbündel auf einen Auftreffpunkt der Wand des Rohrelements (M) zurückzuwerfen, andererseits Transportmittel (F) für das Laserbündel vom Laserschweißgerät zur optischen Zelle,
dadurch gekennzeichnet, daß sie Vorrichtungen (40) zum Erfassen der Form des Rohrelements (M) in der Nähe des besagten Auftreffpunkts umfaßt, wobei diese Erfassungsvorrichtungen (40) unabhängig von den genannten Zentriervorrichtungen sind, dadurch, daß ein geneigter Spiegel (37) beweglich im Schweißkopf (3-6) montiert wird, sowie dadurch, daß die Lage des geneigten Spiegels (37) über die genannten Erfassungsvorrichtungen gesteuert wird.

2. Vorrichtung nach Anspruch 1, dadurch gekennzeichnet, daß die besagten Erfassungsvorrichtungen einen Sensor (40) umfassen, der gestützt auf die Wand des Rohrelements (M) gehalten wird.

3. Vorrichtung nach Anspruch 1 oder 2, dadurch gekennzeichnet, daß die Erfassungsvorrichtungen (40) bezüglich der vom Laserbündel zurückgelegten, Strecke vor einer Öffnung (38) angeordnet sind, durch die das Laserbündel aus dem Schweißkopf (3-6) austritt.

4. Vorrichtung nach Anspruch 2, dadurch gekennzeichnet, daß der Sensor (40) durch eine Öffnung (41) des Schweißkopfs führt, der bezüglich der vom Laserbündel zurückgelegten Strecke vor dem Spiegel (37) angeordnet ist.

5. Vorrichtung nach Anspruch 2 oder 4, dadurch gekennzeichnet, daß der Sensor (40) mechanisch mit dem Spiegel (37) verbunden ist.

6. Vorrichtung nach Anspruch 5, dadurch gekennzeichnet, daß der Sensor (40) fest verbunden ist mit einem Spiegelhalter (36), der mit einer Feder (46) betätigt wird und gelenkig um eine zum Spiegel (37) parallele Achse (A) angebracht ist.

7. Vorrichtung nach Anspruch 5, dadurch gekennzeichnet, daß der Sensor (40) von einem Nookenhalteelement (36A) getragen wird, das gelenkig im Schweißkopf angebracht ist und sich gegen einen Spiegelhalter (36) abstützt, der mit einer Feder (46A) betätigt wird und in diesem Schweißkopf axial beweglich ist.

## Claims

1. Device for laser welding inside a tubular element (M), of the type comprising a welding laser (104), a welding head (3 to 6) equipped with means (21,54) for centring in the tubular element and comprising an optical cell (5) which itself comprises focusing means (L1,L2) and an inclined mirror (37) for optical reflection for receiving a laser beam along the axis of the head and for reflecting this beam focused on a point of impact of the wall of the tubular element (M), and means (F) for conveying the laser beam of the laser to the optical cell, characterised in that it comprises means (40) for detecting the form of the tubular element (M) near to said point of impact, said detecting means being independent from said centring means, in that the inclined mirror (37) is movably mounted in the welding head (3 to 6) and in that the position of the inclined mirror (37) is controlled by the said detection means.

2. Device according to claim 1, characterised in that the said detection means comprise a sensor (40) help up against the wall of the tubular element (M).

3. Device according to claim 1 or 2, characterised in that, in relation to the path travelled by the laser beam, the detecting means (40) are provided upstream of an aperture (38) through which the laser beam exits from the welding head (3 to 6).

4. Device according to claim 2, characterised in that the sensor (40) passes through an opening (41) in the welding head located upstream of the mirror (37) relative to the path travelled by the laser beam.

5. Device according to claim 2 or 4, characterised in that the sensor (40) is mechanically connected to the mirror (37).

6. Device according to claim 5, characterised in that the sensor (40) is integrally attached to a mirror support (36) biased by a spring (46) and articulated about a spindle (A) parallel to the mirror (37).

7. Device according to claim 5, characterised in that the sensor (40) is carried by a cam holder element (36A) which is articulated in the welding head and which rests on a mirror support (36) biased by a spring (46A) and axially movably movable in this welding head.
